# EUROPÄISCHE PATENTSCHRIFT

(11) **EP 4 101 289 B1**
(45) Veröffentlichungstag und Bekanntmachung des Hinweises auf die Patenterteilung: **14.02.2024**
(21) Anmeldenummer: 22172534.4
(22) Anmeldetag: 10.05.2022
(51) Int. Cl.: A01G 9/02, A01G 27/04, A01G 5/06, A47G 7/03

(54) **EINRICHTUNG ZUM EINSTECKEN EINES BLUMENSTRAUSSES IN EINE VASE**
DEVICE FOR INSERTING A BOUQUET INTO A VASE
DISPOSITIF D'INSERTION D'UN BOUQUET DE FLEURS DANS UN VASE

(30) Priorität: 27.05.2021 DE 102021113684
(43) Veröffentlichungstag der Anmeldung: 14.12.2022
(73) Patentinhaber: Aabbadi, Hafida, 41564 Kaarst (DE)
(72) Erfinder: Aabbadi, Hafida, 41564 Kaarst (DE)
(74) Vertreter: Bauer, Dirk

(56) Entgegenhaltungen:
- JP-A- 2003 325 289
- JP-U- S5 645 378
- JP-U- S50 102 693
- JP-U- S62 155 666
- US-A1- 2012 168 017

## Beschreibung

Es ist üblich, die einzelnen Blumenstängel eines Blumenstraußes vor dem Einstecken in eine Vase an ihren Enden abzuschrägen, um eine möglichst ausreichende Versorgung der Blumen mit in die Vase eingefüllter Flüssigkeit, insbesondere Wasser, zu gewährleisten.

Einrichtungen zum Einstecken eines Blumenstraußes in eine Vase gemäß DE 72 44 771 U, US 2019/0183266 A1 und JP 2003 325289 A enthalten
- eine obere Trägerfläche,
- eine an der Unterseite der Trägerfläche anschließende Stirnwand, und
- mehrere in die Trägerfläche eingesetzte Röhren, deren
- obere und untere Enden offen sind,
derart, dass die einzelnen Stängel der Blumen durch die Röhrchen eingesteckt werden können, bis die unteren Stängelenden in die Wasserfüllung der Vase eintauchen.

Ausgehend von diesem Stand der Technik betrifft die Erfindung eine Einrichtung gemäß dem Oberbegriff des Patentanspruchs 1.

Der Erfindung liegt die Aufgabe zugrunde, eine derartige Vorrichtung so zu gestalten, dass eine verbesserte Flüssigkeitsversorgung der Blumen gewährleistet wird.

Zur Lösung dieser Aufgabe ist die Erfindung gekennzeichnet durch die Merkmale des Kennzeichens des Patentanspruchs 1.

Beim Aufstecken der Blumenstängel auf die gemäß Anspruch 5 an den oberen Enden angespitzten Röhrchen werden die Blumen bei in die Vase eingefülltem Wasser durch Kapillarwirkung mit Wasser versorgt, wodurch auch ohne Abschrägen der Blumenstielenden eine verbesserte ausreichende Flüssigkeitsversorgung der Blumen sichergestellt ist.

Gemäß einer bevorzugten Ausführungsform der Erfindung haben die über die Trägerfläche ragenden Abschnitte der Röhrchen eine Länge von 6 mm bis 10 mm, vorzugsweise 7 mm.

Die Trägerfläche hat vorzugsweise die Form eines Kreises oder eines Rechteckes oder ist durch den oberen Abschnitt eines pyramidenförmigen Körpers gebildet.

Die Trägerfläche, die Stützwand und die Röhrchen bestehen vorzugsweise aus einem steifen Material, und die unterhalb der Trägerfläche befindlichen Abschnitte der Röhrchen haben bevorzugt eine geringere Länge als die Höhe der Stützwand.

Die Erfindung wird im Folgenden anhand der Zeichnung näher beschrieben.
Figur 1 zeigt in vereinfachter Darstellung eine kreisringförmige Tragfläche;
Figur 2 zeigt eine Schnittansicht in Richtung der Pfeile II-II in Figur 1;
Figur 3 zeigt in schematischer Darstellung die erfindungsgemäße Einrichtung mit einer pyramidenförmigen Trägerfläche 6.

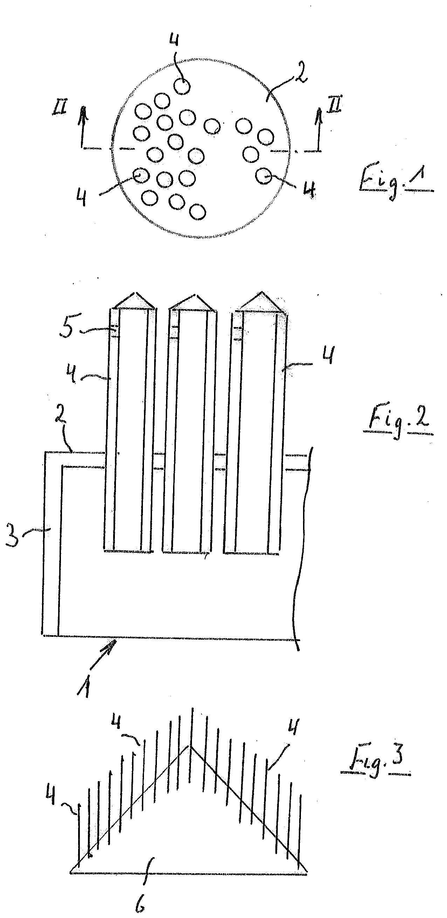

Die gemäß den Figuren 1 und 2 dicht nebeneinander in die Trägerfläche 2 eingesetzten Röhrchen 4 und die Trägerfläche 2 sind zur Vereinfachung der Darstellung und zum Zweck der besseren Übersichtlichkeit stark vergrößert dargestellt.

Die Röhrchen haben einen Außendurchmesser von 130 µm bis 200 µm, vorzugsweise 150 µm und einen Innendurchmesser von 120 µm bis 190 m, vorzugsweise 130 µm bis 140 µm.

Die Röhrchen haben vorzugsweise eine Länge von 20 mm bis 40 mm und ragen mit einem Abschnitt von 6 mm, vorzugsweise 7 mm, über die Tragflächenoberseite.

An die Unterseite des Trägerflächenrandes schließt eine vorzugsweise umlaufende Stützwand 3 an, derart, dass der durch die obere Trägerfläche 2 und die Stützwand 3 gebildete Träger 1 einen offenen Boden hat, so dass die unteren Enden der Röhrchen 4 sich bei rechtzeitigem Nachfüllen von Wasser in die Vase, in die die erfindungsgemäße Einrichtung gestellt wird, stets innerhalb der Wasserfüllung der Vase befinden.

## Patentansprüche

1. Einrichtung (1) zum Einstecken eines Blumenstraußes in eine Vase, enthaltend
- eine obere Trägerfläche (2),
- eine an der Unterseite der Trägerfläche (2) anschließende Stützwand (3) und
- mehrere in die Trägerfläche (2) eingesetzte, an ihrem unteren Ende einseitig offene Röhrchen (4),
**dadurch gekennzeichnet, dass**
- die Röhrchen (4) an ihrem oberen Ende geschlossen sind und
- im Bereich ihres oberen Endes mindestens eine seitliche Öffnung (5) aufweisen, und dass
- die Röhrchen (4) dünnwandig sind und einen Außendurchmesser von 130 µm bis 200 µm und
- einen Innendurchmesser von 120 µm bis 190 µm haben.

2. Einrichtung nach Anspruch 1, **dadurch gekennzeichnet, dass** die Röhrchen (4) einen Außendurchmesser von 150 µm und einen Innendurchmesser von 130 µm bis 140 µm haben.

3. Einrichtung nach Anspruch 1 oder 2, **dadurch gekennzeichnet, dass** die über die Trägerfläche (2) ragenden Abschnitte der Röhrchen (4) eine Länge von 6 mm bis 10 mm haben.

4. Einrichtung nach Anspruch 3, **dadurch gekennzeichnet, dass** die über die Trägerfläche (2) ragenden Abschnitte der Röhrchen (4) eine Länge von 7 mm haben.

5. Einrichtung nach einem der Ansprüche 1 bis 4, **dadurch gekennzeichnet, dass** die oberen Enden der Röhrchen (4) angespitzt sind.

6. Einrichtung nach einem der Ansprüche 1 bis 5, **dadurch gekennzeichnet, dass** die Trägerfläche (2) die Form eines Kreises hat.

7. Einrichtung nach einem der Ansprüche 1 bis 5, **dadurch gekennzeichnet, dass** die Trägerfläche (2) die Form eines Rechteckes hat.

8. Einrichtung nach einem der Ansprüche 1 bis 5, **dadurch gekennzeichnet, dass** die Trägerfläche (2) durch den oberen Abschnitt eines pyramidenförmigen Körpers gebildet ist.

9. Einrichtung nach einem der vorhergehenden Ansprüche, **dadurch gekennzeichnet, dass** die Trägerfläche (2), die Stützwand (3) und die Röhrchen (4) aus einem steifen Material bestehen.

10. Einrichtung nach einem oder mehreren der vorhergehenden Ansprüche, **dadurch gekennzeichnet, dass** die unterhalb der Trägerfläche (2) befindlichen Abschnitte der Röhrchen (4) eine geringere Länge haben, als die Höhe der Stützwand (3).

## Claims

1. A device (1) for inserting a bouquet into a vase, containing
- an upper carrier surface (2),
- a support wall (3) adjoining the underside of the carrier surface (2) and
- several small tubes (4), which are inserted into the carrier surface (2) and which are open on one side on the lower end thereof,
**characterized in that**
- the small tubes (4) are closed on the upper end thereof and
- have at least one lateral opening (5) in the region of the upper end thereof, and that
- the small tube (4) are thin-walled and have an outer diameter of 130 um to 200 um and
- an inner diameter of 120 um to 190 µm.

2. The device according to claim 1, **characterized in that** the small tubes (4) have an outer diameter of 150 um and an inner diameter of 130 um to 140 µm.

3. The device according to claim 1 or 2, **characterized in that** the sections of the small tubes (4) protruding over the carrier surface (2) have a length of 6 mm to 10 mm.

4. The device according to claim 3, **characterized in that** the sections of the small tubes (4) protruding over the carrier surface (2) have a length of 7 mm.

5. The device according to one of claims 1 to 4, **characterized in that** the upper ends of the small tubes (4) are pointed.

6. The device according to one of claims 1 to 5, **characterized in that** the carrier surface (2) has the shape of a circle.

7. The device according to one of claims 1 to 5, **characterized in that** the carrier surface (2) has the shape of a rectangle.

8. The device according to one of claims 1 to 5, **characterized in that** the carrier surface (2) is formed by the upper section of a pyramid-shaped body.

9. The device according to one of the preceding claims, **characterized in that** the carrier surface (2), the support wall (3) and the small tubes (4) consist of a stiff material.

10. The device according to one or several of the preceding claims, **characterized in that** the sections of the small tubes (4) located below the carrier surface (2) have a smaller length than the height of the support wall (3).

## Revendications

1. Dispositif (1), destiné à insérer un bouquet de fleurs dans un vase, comprenant
- une surface porteuse (2) supérieure,
- une paroi de soutien (3) se raccordant sur la face inférieure de la surface porteuse (2) et
- plusieurs capillaires (4) engagés dans la surface porteuse (2), ouverts d'un côté sur leur extrémité inférieure,
**caractérisé en ce que**
- les capillaires (4) sont fermés sur leur extrémité supérieure et
- comportent dans la zone de leur extrémité supérieure au moins un orifice (5) latéral et **en ce que**
- les capillaires (4) sont à paroi mince et ont un diamètre extérieur de 130 µm à 200 µm et
- un diamètre intérieur de 120 µm à 190 µm.

2. Dispositif selon la revendication 1, **caractérisé en ce que** les capillaires (4) ont un diamètre extérieur de 150 µm et un diamètre intérieur de 130 µm à 140 µm.

3. Dispositif selon la revendication 1 ou 2, **caractérisé en ce que** les tronçons des capillaires (4) qui saillissent au-delà de la surface porteuse (2) ont une longueur de 6 mm à 10 mm.

4. Dispositif selon la revendication 3, **caractérisé en ce que** les tronçons des capillaires (4) qui saillissent au-delà de la surface porteuse (2) ont une longueur de 7 mm.

5. Dispositif selon l'une quelconque des revendications 1 à 4, **caractérisé en ce que** les extrémités supérieures des capillaires (4) sont taillées en pointe.

6. Dispositif selon l'une quelconque des revendications 1 à 5, **caractérisé en ce que** la surface porteuse (2) a la forme d'un cercle.

7. Dispositif selon l'une quelconque des revendications 1 à 5, **caractérisé en ce que** la surface porteuse (2) a la forme d'un rectangle.

8. Dispositif selon l'une quelconque des revendications 1 à 5, **caractérisé en ce que** la surface porteuse (2) est constituée par le tronçon supérieur d'un corps de forme pyramidale.

9. Dispositif selon l'une quelconque des revendications précédentes, **caractérisé en ce que** la surface porteuse (2), la paroi de soutien (3) et les capillaires (4) sont constitués d'une matière rigide.

10. Dispositif selon l'une quelconque ou plusieurs des revendications précédentes, **caractérisé en ce que** les tronçons des capillaires (4) qui se trouvent en-dessous de la surface porteuse (2) ont une longueur inférieure à la hauteur de la paroi de soutien (3).
